# EUROPEAN PATENT SPECIFICATION

(11) **EP 3 548 568 B1**
(45) Date of publication and mention of the grant of the patent: **28.10.2020**
(21) Application number: 17804591.0
(22) Date of filing: 30.11.2017
(51) Int. Cl.: C09D 5/16

(54) **A FOULING RELEASE COATING SYSTEM**
FÄULNISFREISETZUNGSBESCHICHTUNGSSYSTEM
SYSTÈME DE REVÊTEMENT ANTISALISSURE

(30) Priority: 02.12.2016 EP 16202062
(43) Date of publication of application: 09.10.2019
(60) Divisional application: 20197822.8
(73) Proprietor: PPG Coatings Europe B.V., 1047 BB Amsterdam (NL); Avery Dennison Corporation, Glendale, CA 91203 (US)
(72) Inventor: COURTIN, Jacques, 2353 HX Leiderdorp (NL)
(74) Representative: Appleyard Lees IP LLP
(86) International application number: PCT/EP2017/081067
(87) International publication number: WO 2018/100108

(56) References cited:
- EP-A1- 2 796 522
- EP-A1- 2 894 206
- EP-A2- 0 320 716
- WO-A1-92/00357

## Description

The present invention relates to a fouling release coating system, an underwater structure having the fouling release coating system applied thereto and a method of application of the fouling release coating system.

Fouling release coating systems are designed to prevent fouling organisms, such as barnacles, mussels and algae, from adhering to the surface of underwater structures, for example ships, piers, pipes etc. The presence of such fouling organisms can be detrimental to such structures, in particular, leading to reduced operation and performance of underwater equipment and diminished vessel performance, including decreased manoeuvrability and excessive fuel consumption. The fouling organisms also impose extensive cleaning operations of the underwater structures.

A variety of coating systems for preventing and reducing the adhesion of fouling organisms have been previously developed. The coating systems need to have certain properties, such as being capable of simple high speed application, demonstrating good adhesion to the underwater structure and having excellent durability and properties suitable for their end use.

Coating systems known in the art include self-polishing antifouling coatings. Such compositions are primarily composed of one or more biocides incorporated into a paint matrix and, although providing good protection against the adherence of fouling organisms, the coatings release the biocides upon interaction with seawater. This family of coatings has perceived problems because of the toxicity of such biocides to marine and aquatic life.

Alternative coating systems known in the art use physical surface phenomena to disrupt the adhesion process. Such coating systems are non-polluting and long lasting, having physical properties such that the surfaces of the coatings have low surface energy and low elastic modulus, preventing and/or reducing the adhesion of fouling organisms to the surfaces thereof. Even if such fouling organisms adhere thereto, the organisms can be removed by a weak force, such as by movement through water or gentle cleaning.

Accordingly, when fouling release coating systems are applied to underwater structures, the low friction surfaces of the coating systems mean that the coatings resist adhesion of the fouling organisms and are easy to clean. Such coating systems provide universal protection against any kind of attachment, leading to optimised performance of the underwater structure. For example, where the underwater structure is a ship's hull, the coating systems can provide lower fuel costs and increased operational activity, ship speed and manoeuvrability.

In practice, the low surface energy fouling release coating systems often employ multiple coating layers, including a tough crosslinked thermoplastic layer (fouling release tie coat) bonded to a fouling release top coat. The mechanical properties are imparted by the fouling release tie coat layer, while the fouling release top coat provides the fouling release characteristics.

Multi-layer fouling release coating systems have been developed that can be secured directly to a desired location on the structure by adhering a self adhesive foil to the surface to be coated in a single step. More than one of the multi-layer foils can be used to adequately cover the surface to be coated. However, it can be difficult to align such foils on the surface of the structure, in particular where the structure has a contoured or uneven construction. In addition, the foils cannot be overlapped upon application to prevent gaps between adjacent foils because of the low friction coefficient properties of their surfaces, essential for the prevention and/or reduction of adhesion of fouling organisms. There therefore exists a breach in the antifouling protection on the structure between the edges of adjacent foils, into which fouling organisms can easily settle and adhere, significantly reducing the antifouling nature of the fouling release coating systems.

It is an object of aspects of the present invention to address one or more of the above mentioned or other problems.

According to a first aspect of the present invention, there is provided a coating system comprising:
(a) a pressure sensitive adhesive foil comprising a fouling release coating; and
(b) an edge sealant fouling release coating composition operable to be applied to an edge of the pressure sensitive adhesive foil.

Suitably, the fouling release coating is situated on an outermost surface of the pressure sensitive adhesive foil, in use.

### Pressure Sensitive Adhesive Foil (a)

The pressure sensitive adhesive foil according to the present invention may comprise a multilayered structure.

Suitably, the pressure sensitive adhesive foil comprises:
(i) an adhesive layer
(ii) a structural layer applied over and to the adhesive layer (i)
(iii) optionally, an intermediate silicone tie coat applied over and to the structural layer (ii); and
(iv) a silicone fouling release top coat applied over and to the structural layer (ii) or, when present, over and to the intermediate silicone tie coat (iii).

### Adhesive Layer (i)

The pressure sensitive adhesive foil according to the present invention may comprise an adhesive layer (i). The pressure sensitive adhesive foil may be secured to the structure in the desired location by the adhesive layer (i). The adhesive layer (i) provides adhesion to the structure, such as a ship hull, on one side and to the structural layer (ii) on the other side. Suitably, the adhesive layer (i) has strong adhesion to both the structure and the structural layer (ii).

The adhesive layer (i) may comprise one or more adhesives. The adhesive layer (i) may comprise one or more pressure-sensitive adhesive. Suitable pressure-sensitive adhesives may be any pressure-sensitive adhesive capable of (a) creating lasting adhesion to both the structure to be coated and the structural layer (ii) for at least 5 years and (b) resistance to aquatic, in particular, marine conditions. Examples of suitable pressure-sensitive adhesives include, but are not limited to one or more of the following: acrylic pressure-sensitive adhesive resins, epoxy pressure-sensitive adhesive resins, amino-based pressure-sensitive adhesive resins, vinyl-based pressure-sensitive adhesive resins, silicone-based pressure sensitive adhesive resins or combinations thereof.

Suitably, the pressure-sensitive adhesive is an acrylic pressure-sensitive adhesive, most suitably an acrylic acid pressure-sensitive adhesive. The acrylic acid pressure-sensitive adhesive may be formed from an acrylic polymer and one or more crosslinker. Examples of suitable acrylic polymers include but are not limited to polymers formed from monomeric acrylic acid and/or derivatives thereof, such as acrylic acid and/or acrylic ester or combinations thereof. The acrylic acid pressure-sensitive adhesive may comprise commercially available acrylic polymer materials. A suitable acrylic polymer material is Loctite DuroTak ® (acrylic base polymers) commercially available from Henkel. Examples of suitable crosslinkers include, but are not limited to one or more of compounds comprising at least one isocyanate functionality and metal organic curing agents, including metal salts such as aluminium acetylacetonate. The acrylic acid pressure-sensitive adhesive may comprise commercially available crosslinkers, such as Desmodur® (isocyanate crosslinker) commercially available from Bayer.

The pressure-sensitive adhesive may be a solvent-based pressure sensitive acrylic adhesive, suitably, a solvent-based pressure sensitive acrylic adhesive allowing application at low temperatures from -10 to 60 °C, such as from 3 to 30 °C.

The adhesive layer (i) may have any suitable thickness. The thickness of the adhesive layer (i) will be dependent on factors such as the end-use of the pressure sensitive adhesive foil and fouling release coating system according to the present invention and the type of pressure-sensitive adhesive used in the adhesive layer (i). Suitably, the adhesive layer (i) has a thickness from 5 to 250 µm (micrometres), suitably from 60 to 150 µm.

Where the structural layer (ii) of the pressure sensitive adhesive foil according to the present invention comprises a thermoplastic layer (iib) (discussed below), the adhesive layer (i) may have a thickness from 40 to 200 µm (micrometres), suitably from 60 to 100 µm. The thickness of the adhesive layer (i) will be dependent on factors such as the end-use of the pressure sensitive adhesive foil and fouling release coating system according to the present invention and the type of pressure-sensitive adhesive used in the adhesive layer (i). The adhesive layer (i) typically represents 8-30% by weight (wt%)of the pressure sensitive adhesive foil.

### Structural Layer (ii)

The pressure sensitive adhesive foil according to the present invention may comprise a structural layer (ii). The structural layer (ii) may be applied over and to the adhesive layer (i). The structural layer (ii) provides adhesion to the adhesive layer (i) on one side and the optional intermediate silicone tie coat (iii) or if the intermediate silicone tie coat (iii) is not present, the silicone fouling release top coat (iv) on the other side.

The structural layer (ii) of the pressure sensitive adhesive foil according to the present invention may comprise a synthetic material layer (iia) or a thermoplastic layer (iib).

### Synthetic Material Layer (iia)

Suitably, the synthetic material layer (iia) has excellent properties of impermeability, water resistance, flexibility and elongation.

The synthetic material layer (iia) may comprise one or more resin. Examples of suitable resins include, but are not limited to one or more of the following: polyurethane resin, polyurethane acrylic rein, vinyl chloride resin, rubber-based resin, polyester resin, silicone resin, elastomeric resin, fluoro resin, polyamide resin, polyolefin resin or combinations thereof.

The synthetic material layer (iia) may comprise one or more sub-layers, such as two or more sub-layers. The resins may be present in one or more of the sub-layer, such as two or more of the sub-layers. The nature and components of each of the said sub-layers can provide the synthetic material layer (iia) with additional anchorage and barrier properties.

Suitably, the synthetic material layer (iia) comprises an elastomeric resin, such as an elastomeric resin comprising an olefin-based elastomer. Suitable examples of olefin-based elastomers include polypropylene-based elastomers, polyethylene-based elastomers or combinations thereof. Suitably, the olefin-based elastomer is selected from one or more of the following: no-orientated polypropylene, bi-orientated polypropylene, blow polypropylene or combinations thereof. Elastomers possess the mechanical properties to undergo elastic deformation under stress, with the material returning to its previous size without permanent deformation. The use of an olefin-based elastomer can thus provide a pressure sensitive adhesive foil that can be applied on both flat and curved surfaces with good workability without wrinkle formation. A polypropylene-based elastomer further allows a good anchorage on the adhesive layer (i), and the optional intermediate silicone tie coat layer (iii) and when the optional intermediate silicone tie coat layer (iii) is not present, the silicone fouling release top coat (iv).

By the term "good anchorage of layers" as used herein, is meant that the layers (i) and (iia), the layers (iia) and (iii) and, when the optional intermediate silicone tie coat layer (iii) is not present, the layers (iia) and (iv) do not split up during the period and under the conditions of the intended end-use of the pressure sensitive adhesive foil and fouling release coating system according to the present invention.

The synthetic material layer (iia) may be treated on one or both of its sides, suitably both sides, to enhance the adhesion of the adhesive layer (i) and the intermediate silicone tie coat (iii), or if the intermediate silicone tie coat layer (iii) is not present, the silicone fouling release top coat (iv). Suitable treatment methods will be well known to those skilled in the art. Examples of suitable treatment methods include corona treatment, plasma treatment and/or primer treatment. The synthetic material layer (iia) may suitably be treated using a corona treatment and/or a plasma treatment. Such treatment methods result in the formation of epoxy functional groups, acrylic functional groups, carboxylic functional groups, amino functional groups, urethane functional groups and/or silicone functional groups on the surface of the synthetic material layer (iia). The provision of functional groups on the surface(s) of the layer (iia), increases the surface energy. Suitably, the synthetic material layer (iia) is treated on both sides with a plasma treatment using an N₂ gas, providing amide, amine and imide functional groups on both sides of the synthetic material layer (iia).

Suitably, the synthetic material layer (iia) comprises a polypropylene-based elastomer and is treated on both sides with a plasma treatment using an N₂ gas, providing amide, amine and imide functional groups on both sides of the synthetic material layer (iia).

The synthetic material layer (iia) may comprise a porous material. If the synthetic material layer (iia) is porous to any component which could migrate and modify the original properties of the pressure sensitive adhesive foil, it could be necessary to adjust the thickness of the synthetic material layer (iia) and/or add a barrier layer in the synthetic material layer (iia) or to its surface(s). The thickness of the synthetic material layer (iia) will be dependent on the nature of the synthetic material layer (iia). If the thickness of the synthetic material layer (iia) is too low, the migration from any component coming from the optional intermediate silicone tie coat layer (iii) or the silicone fouling release top coat (iv) or a water molecule, may go through the synthetic material layer (iia) and modify the original properties of the pressure sensitive adhesive foil. The synthetic material layer (iia) may have any suitable thickness. Suitably, the thickness of the synthetic material layer (iia) is from 10 to 3000 µm (micrometres), suitably from 30 to 1000 µm, such as from 50 to 300 µm.

### Thermoplastic Layer (iib)

The thermoplastic layer (iib) may comprise a polar thermoplastic polymer, the polar thermoplastic polymer being selected from a thermoplastic polyurethane or a polyolefin grafted with polar groups.

The term "polar thermoplastic polymer" or like terms as used herein, is meant a thermoplastic polymer, wherein at least one atom in its molecular structure is selected from nitrogen, oxygen and halogen, in addition to carbon and hydrogen.

When the structural layer (ii) of the pressure sensitive adhesive foil according to the present invention comprises the thermoplastic layer (iib), the intermediate silicone tie coat (iii) must be present in the foil and adhere to and over the thermoplastic layer (iib). The thermoplastic layer (iib) therefore provides adhesion to the adhesive layer (i) on one side and the intermediate silicone tie coat (iii) on the other side.

It has been surprisingly found that such polar thermoplastic polymers provide good adhesion between the adhesive layer (i) and the intermediate silicone tie coat (iii). In addition, such polar thermoplastic polymers prevent and/or reduce the exuding liquid optionally present in the silicone fouling release top coat (iv) from migrating through the underlying adhesive layer (i) and subsequently altering its adherence to the surface of the structure. This adherence to the structure's surface is further improved by the thermoplastic properties of the polymers and their ability to conform with surface irregularities of the structure.

The thermoplastic layer (iib) may comprise a thermoplastic polyurethane (TPU). Examples of suitable thermoplastic polyurethanes include both aliphatic and aromatic thermoplastic polyurethane. The aliphatic thermoplastic polyurethane suitably comprises a linear segmented block copolymer composed of soft and hard segments, the hard segment being aliphatic. The aromatic thermoplastic polyurethane suitably comprises a linear segmented block copolymer composed of soft and hard segments, the hard segment being aromatic. Suitable examples of aliphatic thermoplastic polyurethanes include aliphatic thermoplastic polyurethanes based on isocyanates such as 4,4'-methylenebis(cyclohexyl isocyanate) (H12 MDI). Commercially available aliphatic thermoplastic polyurethane include 49510 on PET,.006 (Argotec). Suitable examples of aromatic thermoplastic polyurethanes include aromatic thermoplastic polyurethanes based on isocyanates, such as methylene diphenyl 4,4'-diisocyanate (MDI). Suitably, the thermoplastic polyurethane is aromatic thermoplastic polyurethane, but aliphatic thermoplastic polyurethane is suitably utilised when colour and clarity retention in sunlight exposure is a priority.

The thermoplastic layer (iib) may comprise a polyolefin grafted with polar groups. Suitably, the polyolefin may be polyethylene (PE) or polypropylene (PP). The polar groups of the polyolefin may comprise at least one atom selected from nitrogen, oxygen and halogen, such as groups containing a carboxylic acid or an acid anhydride. Suitably, the polyolefin utilised is polypropylene. Suitably, the polyolefin grafted with polar groups is a polypropylene grafted with acrylic acid (PP-g-AA).

PP-g-AA comprises a polypropylene backbone, which contains tertiary hydrogens which are highly oxidisable. In this polymer, some quantity of the polypropylene units are grafted with blocks of one or more acrylic acid units. By the term 'grafted' as used herein, is meant an acrylic acid block forms a bond with a carbon atom of a polypropylene unit. One acrylic acid b lock can be grafted to one, two or more polypropylene units in one or more polypropylene macromolecules., Suitably, less than 5 mol% of the polypropylene units of the polymer are grafted with an acrylic acid block. There are many commercial polypropylene grafted with acrylic acid including, for example, CP28UB Embossing 11 (Profol).

The thermoplastic layer (iib) may have any suitable thickness. Suitably, the thickness of the thermoplastic layer (iib) is from 30 to 300 µm (micrometres). The thermoplastic layer (iib) typically represents 6 to 40% by weight (wt%) of the pressure sensitive adhesive foil.

### Intermediate Silicone Tie Coat (iii)

The pressure sensitive adhesive foil according to the present invention optionally comprises an intermediate silicone tie coat (iii). The intermediate silicone tie coat (iii) may be applied over and to the structural layer (ii).

When the structural layer (ii) of the pressure sensitive adhesive foil according to the present invention comprises the synthetic material layer (iia), the pressures sensitive adhesive foil optionally comprises an intermediate silicone tie coat (iii).

When the structural layer (ii) is a synthetic material layer (iia), when present, the intermediate silicone tie coat (iii) provides adhesion to the synthetic material layer (iia) on one side and the silicone fouling release top coat (iv) on the other, providing a bond between the synthetic material layer (iia) and the silicone fouling release top coat (iv).

When the structural layer (ii) is a synthetic material layer (iia), the intermediate silicone tie coat layer (iii) may comprise one or more silicone components. The intermediate silicone tie coat layer (iii) may comprise two silicone components, more suitably a two component polysiloxane or a silane silicone curable by a poly-condensation system.

Suitably, when the structural layer (ii) is a synthetic material layer (iia), the intermediate silicone tie coat layer (iii) comprises an organo functional silane having the following chemical structure:

X-CH₂CH₂CH₂Si(OR)₃₋ₙR'ₙ

wherein n = 0, 1 or 2.

OR represents a hydrolysable group such as a methoxy, ethoxy or acetoxy group, suitably an acetoxy group.

X represents an organo functional group such as an epoxy, amino, methacryloxy or sulphide group. Suitably, X represents an organo functional group comprising an additional acid or organic acid so as to increase the adhesion of the silicone fouling release top coat (iv) to the intermediate silicone tie coat (iii). The additional acid is suitably an organic acid, for example a carboxylic acid such as acetic acid.

When the structural layer (ii) is a synthetic material layer (iia), the intermediate silicone tie coat layer (iii) may have any suitable thickness. The thickness is such that the intermediate silicone tie coat layer (iii) is dry after a heating step during a process for the manufacture of the pressure sensitive adhesive foil, for example, when it leaves an oven during the manufacturing process and has a good anchorage on the structural layer (iia). It also enables the intermediate silicone tie coat (iii) to have a satisfactory anchorage on the silicone fouling release top coat (iv) which is coated onto the intermediate silicone tie coat layer (iii). Suitably, the intermediate silicone tie coat layer (iii) has a thickness from 10 to 120 µm (micrometres), suitably from 20 to 80 µm, such as from 30 to 60 µm. When the thickness of the intermediate silicone tie coat (iii) is greater than 120 µm, the intermediate silicone tie coat (iii) is not dry after the heating step and the consequence is that it sticks to the removable liner (ia) (discussed below) and the next step, which is the coating of the silicone fouling release top coat (iv) cannot be done. When the thickness of the intermediate silicone tie coat (iii) is lower than 20 µm, the combination of the intermediate silicone tie coat (iii) and the silicone fouling release top coat (iv) may be removed from the pressure sensitive adhesive foil, resulting in the loss of the fouling release properties.

When the structural layer (ii) of the pressure sensitive adhesive foil according to the present invention comprises the thermoplastic layer (iib), the intermediate silicone tie coat (iii) must be present in the pressure sensitive adhesive foil.

When the structural layer (ii) is a thermoplastic layer (iib), the intermediate silicone tie coat (iii) must be present and provides adhesion to the thermoplastic layer (iib) on one side and the silicone fouling release top coat (iv) on the other, providing a bond between the thermoplastic layer (iib) and the silicone fouling release top coat (iv). Suitable intermediate silicone tie coats (iii) will be well known to those skilled in the art, for example, those disclosed in US 4861670. The intermediate silicone tie coat (iii) may comprise commercially available silicone tie coats. A suitable example of a silicone tie coat is SIGMAGLIDE® 790, commercially available from PPG.

When the structural layer (ii) is a thermoplastic layer (iib), the intermediate silicone tie coat (iii) may comprise vulcanisable silicone.

When the structural layer (ii) is a thermoplastic layer (iib), the intermediate silicone tie coat layer (iii) may have any suitable thickness. Suitably, the intermediate silicone tie coat layer (iii) has a thickness from 10 to 100 µm (micrometres), suitably from 20 to 50 µm. The intermediate silicone tie coat (iii) typically represents 12 to 16% by weight (wt%) of the pressure sensitive adhesive foil.

### Silicone Fouling Release Top Coat (iv)

The pressure sensitive adhesive foil according to the present invention comprises a silicone fouling release top coat (iv). When the structural layer (ii) of the pressure sensitive adhesive foil is a synthetic material layer (iia), the silicone fouling release top coat (iv) may be applied over and to the synthetic material layer (iia) or when present, over and to the intermediate silicone tie coat (iii) such that the outer surface of the pressure sensitive adhesive foil comprises an outer surface having a fouling release coating, the silicone fouling release top coat (iv).

Reference herein to an "outer surface" or like terms refers to an outermost surface, in use.

When the structural layer (ii) is a synthetic material layer (iia), the silicone fouling release top coat (iv) may comprise one or more silicone resins. Such silicone resins may be condensation-type silicone resins or addition-type silicone resins. The silicone resins may comprise one or more silicone components. One component silicone resins may be dried alone or two component silicone resins may be compounded with a curing agent.

Suitably, the silicone resin is an elastomeric silicone resin, such as a polysiloxane resin containing reactive groups which can react with a curing agent in a condensation-type reaction. This kind of resin gives good properties of low surface energy. Examples of suitable polysiloxanes include polydialkylsiloxane, polydiarylsiloxane or polyalkylsiloxane typically of the formula:

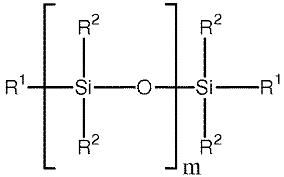

Suitably, when the structural layer (ii) is a synthetic material layer (iia), the silicone fouling release top coat (iv) comprises one or more fouling release agents. Suitable fouling release agents will be well known to those skilled in the art. Suitable examples of fouling release agents include but are not limited to one or more of the following: silicone oil, liquid paraffin, surfactant wax, petrolatum, animal fats, fatty acids or combinations thereof.

When present, the fouling release agent lowers the surface energy of the silicone fouling release top coat (iv) and the pressure sensitive adhesive foil maintains a good fouling release property for an extended time period. The fouling release agent migrates to the surface of the silicone resin as matrix and covers the surface of the silicone fouling release top coat (iv) with the fouling release component to reduce and prevent the fouling on an underwater structure by reducing the surface energy.

Suitably, the fouling release agent is a silicone oil, such as a non-hydrolysable silicone oil. Suitably, the non-hydrolysable silicone oil is a homopolymer siloxane oil or a copolymer siloxane oil, such as phenyl-methyl dimethyl siloxane copolymer and/or phenyl-methyl siloxane homopolymer.

Suitably, the fouling release agent is unreactive with the silicone resin of the silicone fouling release top coat (iv). The fouling release effect is thus maintained for a long period of time.

The fouling release agent may be present in the silicone fouling release top coat (iv) in any suitable amount. Suitably, the silicone fouling release top coat (iv) comprises from 0.1 to 100 wt% of fouling release agent, such as from 1 to 90 wt% or even from 2 to 50 wt%. When in this range, the pressure sensitive adhesive foil has good fouling release properties to reduce and/or prevent fouling on an underwater structure. When lower than 0.1 wt%, the fouling release property is not achieved and the amount of fouling cannot be reduced and/or prevented on an underwater structure. When the value is outside the above range, the fouling release agent is released from the pressure sensitive adhesive foil and may cause a problem for the anchorage of the silicone fouling release top coat (iv) on the intermediate silicone tie coat (iii) or if the intermediate silicone tie coat (iii) is not present, on the synthetic material layer (iia).

When the structural layer (ii) is a synthetic material layer (iia), the silicone fouling release top coat (iv) may have any suitable thickness. The thickness is such that when in that range, the silicone fouling release top coat (iv) is dry after a heating step during the process for the manufacture of the pressure sensitive adhesive foil, for example, when it leaves an oven during such manufacturing process and has fouling release properties to reduce and/or prevent the adhesion of fouling organisms on an underwater structure. Suitably, the silicone fouling release top coat (iv) has a (dry film) thickness from 80 to 800 µm (micrometres), suitably from 120 to 300 µm, such as from 180 to 250 µm. When lower than 80 um, the fouling release property may not be sufficient to reduce and/or prevent the adhesion of fouling organisms on underwater structures, which will increase the water friction and reduce the speed and manoeuvrability of mobile underwater structures.

When the structural layer (ii) of the pressure sensitive adhesive foil according to the present invention is a thermoplastic layer (iib), the silicone fouling release top coat (iv) may be applied over the intermediate silicone tie coat (iii) such that the outer surface of the pressure sensitive adhesive foil comprises an outer surface having a fouling release coating, the silicone fouling release top coat (iv).

Reference herein to an "outer surface" or like terms refers to an outermost surface, in use.

When the structural layer (ii) is a thermoplastic layer (iib), the silicone fouling release top coat (iv) may comprise a polysiloxane, such as polydialkyl siloxanes, for example, polydimethylsiloxane. The silicone fouling release top coat (iv) may comprise a one component silicone system or a two component silicone system. Suitably, the silicone fouling release top coat (iv) is a two component system. The silicone fouling release top coat (iv) may comprise or may be the product of at least one reactive silicone, at least one condensation catalyst and at least one crosslinker.

Suitably, the reactive silicone is at least one of a polydialkylsiloxane, a polydiarylsiloxane or a polyalkylarylsiloxane of the formula: 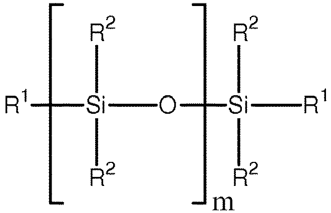 wherein each R¹ is a hydroxyl radical or has the formula: 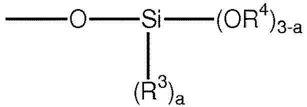 wherein each R² independently represents a hydrocarbon or fluorinated hydrocarbon radical, each R³ and R⁴ independently represents a hydrocarbon radical, a is 0 or 1, and m has a value such that the viscosity of the compound under ambient temperature and pressure conditions is up to 50,000 centipoise. Examples of suitable hydrocarbon radicals can include but are not limited to one or more of the following: C₁-C₂₀ alkyl, C₆-C₂₀ aryl, C₆₋₂₀ alkaryl, vinyl, isopropenyl, allyl, butenyl and hexenyl. An example of a suitable fluorinated hydrocarbon radical is 333-trifluoropropyl. Suitably, the hydrocarbon radical is phenyl or C₁-C₄ alkyl, more suitably methyl. Suitably, each R², R³ and R⁴ is alkyl and more suitably, methyl.

The silicone fouling release top coat (iv) may comprise or may be the product of two or more reactive silicones differing in average molecular weight, which give bimodal composition known to have advantages over a single monomodal composition.

Suitable condensation catalysts will be well known to those skilled in the art. Suitable condensation catalysts may be those known to be useful for promoting condensation curing of a Room Temperature Vulcanisable (RTV) material. Examples of suitable condensation catalysts may include tin, zirconium, titanium and aluminium compounds. Examples of suitable condensation catalysts may include but are not limited to one or more of the following: dibutyltin dilaurate, dibutyltin diacetate, dibutyltin methoxide, dibutyltin bis (acetylacetonate), 1,3-dioxypropane-titanium bis (acetylacetonate), titanium naphthenate, tetrabutyl titanate, zirconium octanoate and aluminium acetylacetonate. Various salts of organic acids with such metals as lead, iron, cobalt, manganese, zinc, antimony and bismuth may also be used. Suitably, the condensation catalyst is a tin and/or titanium compound.

Suitable crosslinkers will be well known to those skilled in the art. Suitable crosslinkers include trifunctional and tetrafunctional silanes. By the term "functional" in this context is meant the presence of a silicone-oxygen bond. Example of suitable crosslinkers include one or more of the following: methyltrimethoxysilane, methyltriethoxysilane, 2-cyanoethyltrimethoxysilane, metyhltriacetoxysilane, tetraethyl silicate, tetra-n-propyl silicate and combinations thereof. Suitably, tetrafunctional silanes are used, such as tetraalkyl silicates.

When the structural layer (ii) is a thermoplastic layer (iib), the silicone fouling release top coat (iv) may further comprise an additive or combination of additives. Suitable additives will be well known to a person skilled in the art. An example of a suitable additive is a filler. Suitable fillers will be well known to the person skilled in the art. Suitable examples of fillers include reinforcing and extending (non-reinforcing) fillers. Suitable reinforcing fillers may be commercially available in the form of relatively large aggregated particles typically having an average size significantly greater than 300 nm (nanometres). Suitably, the reinforcing filler is a silica filler, including fumed silica and precipitated silica, having surface areas in the ranges of 90-325 and 8-150 m²/g respectively. The reinforcing filler may be pre-treated with a treating agent to render it hydrophobic. Suitable treating agents may be selected from one or more of the following: cyclic silicones such as cyclooctamethyltetrasiloxane, 1,3-divinyl-1,1,3-tetramethyidisilazane, hexamethylcyclotrisilazane, octamethyl cyclotetrasilazane or combinations thereof. Suitably, the treating agent is hexamethyidisilazane.

Suitable examples of extending (non-reinforcing) fillers include, but are not limited to one or more of the following: titanium dioxide, lithopone, zinc oxide, zirconium silicate, iron oxide, diatomaceous earth, calcium carbonate, glass fibres or spheres, magnesium oxide, chromic oxide, zirconium oxide, aluminium oxide, crushed quartz, calcined clay, talc, kaolin, asbestos, carbon, graphite, cork, cotton, synthetic fibres and combinations thereof.

When the structural layer (ii) is a thermoplastic layer (iib), the relative proportions of the various constituents of the silicone fouling release top coat (iv) may be varied within wide limits. The filler may be present in the silicone fouling release top coat (iv) in any suitable amount. The filler may be present from 5-200 parts by weight, suitably from 10-150 parts by weight per 100 parts of reactive silicone. The condensation catalysts may be present in the silicone fouling release top coat (iv) in any suitable amount. The condensation catalysts may be present in an amount of between 0.001-2.5 wt% of the thermoplastic layer (iib), based on the combination of reactive silicone and filler. The crosslinker may be present in the silicone fouling release top coat (iv) in any suitable amount. The crosslinker may be present in an amount of between 0.25-5.0 wt% of the thermoplastic layer (iib), based on the combination of reactive silicone and filler. The silicone fouling release top coat (iv) may further comprise suitable addition curable silicone coating materials. Suitable addition curable coating materials will be well known to those skilled in the art.

When the structural layer (ii) is a thermoplastic layer (iib), the silicone fouling release top coat (iv) may comprise a vulcanisable silicone and an exuding liquid. The exuding liquid is released very slowly through the silicone polymer, generally enabling to further slow down the build up of undesired organisms and hence further improves the fouling release properties of the vulcanisable silicone. Suitable examples of extruding liquids include compounds having a boiling point of at least 250 °C at atmospheric pressure. Suitable examples of extruding liquids include but are not limited to one or more of the following: silicone oils, low molecular weight polyolefins, polyesters, polyisocyanates, polyurethanes, polyepoxides and combinations thereof. Suitably, the extruding liquid is a silicone oil. Silicone oils generally consist of polydihydrocarbyl siloxanes, of which the hydrocarbyl groups may be substituted with heteroatoms. The hydrocarbyl groups may be alkyl groups, in particular methyl groups or all or part may be aryl groups, in particular phenyl groups.

When the structural layer (ii) is a thermoplastic layer (iib), the silicone fouling release top coat (iv) may have any suitable dry film thickness. Suitably, the silicone fouling release top coat (iv) has a dry film thickness from 10-600 µm (micrometres), suitably from 20 to 500 µm, such as from 30-400 µm or even from 150-250 µm. The silicone fouling release top coat (iv) typically represents from 25 to 45% by weight (wt%) of the pressure sensitive adhesive foil.

An example of a commercially available silicone fouling release top coat (iv) is SIGMAGLIDE® 890, available from PPG.

### Removable Liner (ia)

The pressure sensitive adhesive foil according to the present invention may optionally further comprise a removable liner (ia).

When the structural layer (ii) is a synthetic material layer (iia), the removable liner (ia) may optionally be applied on the adhesive layer (i). Suitably, the removable liner (ia) is present. The liner (ia) may be removed prior to application of the pressure sensitive adhesive foil to the surface of the structure. The removable liner (ia) may comprise a siliconized paper or siliconized synthetic layer. When the intermediate silicone tie coat (iii) is not present, the removable liner (ia) can exert two functional roles: (1) the role of a liner for the adhesive layer (ii) and (2) when the pressure sensitive adhesive foil is wound into a roll, the role of a protective material for the intermediate silicone tie coat (iii) or the silicone fouling release top coat (iv).

Suitably, when the structural layer (ii) is a synthetic material layer (iia), the removable liner (ia) is a clay-coated backing paper coated by an addition-type siliconised system. The clay coated paper contains a humidity rate of suitably 3% or more, such as between 6 to 10% by weight of water. The humidity, contained in the paper, contributes to the hydrolysis of the acetate ion CH₃COO-, which is a product formed during curing of the intermediate silicone tie coat (iii). The acetate ion has to be destroyed during the process; the humidity contained in the liner participating in this hydrolysis of the acetate ion. The property of the clay coated removable liner is important as it is well-known that the kinetic and the post curing of the last deposit comprising the silicone fouling release top coat (iv) is affected by the presence of the acetate ion. Now, it has been observed that the humidified paper liner reduces the amount of residual acetic acid in the intermediate silicone tie coat (iii) and thus advantageously enables restoration of a good curing kinetic of the silicone fouling release top coat (iv). Indeed, suitably, during curing of the intermediate silicone tie coat (iii), the pressure sensitive adhesive foil comprising layers (ia), (i), (iia) and (iii) is wound into a roll so that the intermediate silicone tie coat (iii) comes into contact with the removable liner (ia) which may reduce the amount of acetate. When the roll is unwound, the silicone fouling release top coat (iv) may be coated on the intermediate silicone tie coat (iii) which has a reduced amount of acetic acid. When a siliconised synthetic or polyethylene paper is used as removable liner (ia), the acetate ion is not hydrolysed when the composition is wound into a roll, which will slow down curing of the silicone fouling release top coat (iv) which is not dry after the process step and may give some variations of thickness of the silicone fouling release top coat (iv) by deepness in the roll.

Suitably, when the structural layer (ii) is a synthetic material layer (iia), the removable liner (ia) has a weight of 15 gm², such as 25 gm², or even from 40 to 165 gm². When the weight is in this range, the removability of the removable liner (ia) from the adhesive layer (i) is satisfactory and enables a good working efficiency. When the weight is lower than the above range, it becomes difficult to remove the removable liner (ia) because of tearing of the removable liner (ia) which may result in some parts of the liner (ia) staying attached to the adhesive layer (i).

When the structural layer (ii) is a thermoplastic layer (iib), the removable liner (ia) may optionally be applied on the adhesive layer (i). Suitably, the removable liner (ia) is present. The liner (ia) may be removed prior to application of the pressure sensitive adhesive foil to the surface of the structure.

When the structural layer (ii) is a thermoplastic layer (iib), the removable liner (ia) may comprise humidified paper, suitably containing more than 4%, such as more than 6% by weight of water. This is particularly advantageous when the intermediate silicone tie coat (iv) comprises vulcanisable silicone, in particular, when acetic acid is released during the curing of the intermediate silicone tie coat (iv), the removable liner (ia) (having water content as above) is particular advantageous. The acetic acid yielded in the intermediate silicone tie coat (iii) subsequently dramatically slows down the kinetic of the fouling release top coat (iv) curing. It has been observed however that the liner (ia) reduces the amount of residual acetic acid in the intermediate silicone tie coat (iii) and thus, advantageously enables to restore a good curing kinetic of the silicone fouling release top coat (iv). Indeed, during coating of the intermediate silicone tie coat (iii), the pressure sensitive adhesive foil comprising layers (ia), (i), (iib) and (iii) is wound into a roll so that the intermediate silicone tie coat (iii) comes into contact with the liner (ia) which may absorb the acetic acid. When the roll is unwound, the silicone fouling release top coat (iv) may then be applied on the intermediate silicone tie coat (iii) having a reduced amount of acetic acid.

### Film Layer (v)

The pressure sensitive adhesive foil may further comprise a film layer (v). The film layer (v) may be a removable polymeric and/or protective film. The removable polymeric and/or protective film may be applied over and to the silicone fouling release top coat (iv) to protect the silicone fouling release top coat (iv). The removable polymeric and/or protective film may be removed notably once the adhesive layer (i) of the pressure sensitive adhesive foil has been applied to the surface of the structure to be coated.

Suitably, when the structural layer (ii) is a synthetic material layer (iia), the film layer (v) is present.

When the structural layer (ii) is a synthetic material layer (iia), the film layer (v) may comprise a polyvinylidene fluoride, polyurethane, polyvinylchloride, polyester, polypropylene or another material.

Suitably, when the structural layer (ii) is a synthetic material layer (iia), the film layer (v) is a polyester or a polypropylene film.

The film layer (v) advantageously prevents the migration of silicone and/or exuding liquid up to the adhesive layer (i) when the pressure sensitive adhesive foil comprising layers (ia), (i), (iia), (iv) and (v) is wound into a roll, wherein the silicone fouling release top coat (iv) would come into contact with the removable liner (ia) when the film layer (v) would be absent. This is likewise the case when the pressure sensitive adhesive foil comprising layers (i), (iia), optionally (iii), (iv) and (v) is wound into a roll, wherein the silicone fouling release top coat (iv) would come directly into contact with adhesive layer (i) when the film layer (v) would be absent.

When the structural layer (ii) is a synthetic material layer (iia), the film layer (v) has one or more functions, suitably two functions or more. One function may be the protection of the silicone fouling release top coat (iv) from scratch and scuff during manipulation and application. The film layer (v) has to be removed just after the adhesive layer (i) of the pressure sensitive adhesive foil has been applied to the surface to be coated. A second function may be the transfer of a film layer (v) with a defined engineered surface to the silicone fouling release top coat (iv). Suitably, the removable polymeric film (v) is laminated on top of a silicone fouling release top coat (iv) which is not completely dry. Post-curing is subsequently used to create a specific surface of the silicone fouling release top coat (iv) of the pressure sensitive adhesive foil. If the appearance of the film layer (v) is an ultra smooth film, the silicone fouling release top coat (iv) will be extra smooth. Suitably, the film layer (v) is structured with a positive relief. Due to contact between the film layer (v) and the silicone fouling release top coat (iv), the negative of said positive relief is transferred on the surface of the fouling release top coat (iv), providing an engineered surface of said silicone fouling release top coat (iv). The aim of the engineered surface is to improve the drag resistance and the fouling release property. A third function may be, when the pressure sensitive adhesive foil is wound into a roll, to prevent the migration of components from the intermediate silicone tie coat (iii) and the silicone fouling release top coat (iv) though the removable liner (ia) which could modify the original properties of the pressure sensitive adhesive foil.

Suitably, when the structural layer (ii) is a thermoplastic layer (iia), the pressure sensitive adhesive foil includes layers (ia), (i), (iia), iii), (iv) and (v) and can be wound and stored in a roll.

When the structural layer (ii) of the pressure sensitive adhesive foil is a thermoplastic material (iib), the film layer (v) is suitably a polyester or polypropylene film. The film advantageously prevents the migration of silicone and/or extruding liquid up to the adhesive layer (i) when the pressure sensitive adhesive foil comprising layers (ia), (i), (iib), (iii), (iv) and (v) is wound into a roll and the silicone fouling release top coat (iv) comes into contact with the removable liner (ia).

Advantageously, when the structural layer (ii) is a thermoplastic layer (iib), the film layer (v) is applied over and to the silicone fouling release top coat (iv) prior to completion of the curing and/or drying of the silicone fouling release top coat (iv), enabling the structure of the surface of the silicone fouling release top coat (iv) to be very smooth or embossed.

Suitably, when the structural layer (ii) is a thermoplastic layer (iib), the pressure sensitive adhesive foil includes layers (ia), (i), (iib), (iii), (iv) and (v) and can be wound and stored in a roll.

The pressure sensitive adhesive foil according to the present invention may have any suitable thickness. The thickness depends on the thickness of each layer in the pressure sensitive adhesive foil provided that the properties claimed in the invention are not affected. Suitably, the pressure sensitive adhesive foil has a thickness from 50 to 5000 µm (micrometres), suitably from 100 to 2000 µm, such as from 200 to 700 µm.

The pressure sensitive adhesive foil may have any appropriate strength of adhesion for a fouling release composition. The strength of adhesion of the pressure sensitive adhesive foil may be (at most) 0.1 N/mm² or less, suitably 0.01 N/mm² or less, such as 0.002 N/mm². The lower the strength of adhesion is between the silicone fouling release top coat (iv) of the pressure sensitive adhesive foil and the fouling organisms, the more efficient is the pressure sensitive adhesive foil in terms of fouling release properties. A low strength of adhesion may also be beneficial to low drag properties.

Techniques to measure the strength of adhesion will be well known to those skilled in the art. The strength of adhesion of fouling organisms onto the pressure sensitive adhesive foil according to the present invention may be measured with a dynamometer such as a ADEMBA DM10. The method may be as follows: apply a pressure on the fouling organism to release it from the silicone fouling release top coat (iv) of the pressure sensitive adhesive foil.

The pressure sensitive adhesive foil may have any suitable impact absorption rate. Suitably, the pressure sensitive adhesive foil has an impact absorption rate of at least 10%. When the value is within this range, the pressure sensitive adhesive foil has an efficient bonding to reduce and prevent fouling.

Suitably, the pressure sensitive adhesive foil is flexible enough to allow a good conformation to all irregular shapes of a structure. Techniques to measure flexibility will be well known to those skilled in the art. The flexibility may be measured by testing the tensile strength of the pressure sensitive adhesive foil at 10% elongation, according to the method ISO 527-3/2/300.

Suitably, the tensile strength at 10% elongation of the pressure sensitive adhesive foil according to the present invention is 100 N/15 mm or less, such as 80 N/15 mm or less, or even 60 N/15 mm or less. When the tensile strength at 10% elongation is in this range, the pressure sensitive adhesive foil can be applied with satisfaction on the shapes of structure. A higher tensile strength at 10% elongation, outside of the above range, may cause the lifting of the pressure sensitive adhesive foil from an irregular structure, and is therefore undesired.

The elongation at break of the pressure sensitive adhesive foil depends on the elongation of each layers (i)-(iv). Suitably, the elongation at break at 23 °C is at least 15%, more suitably, at least 50%. When the elongation at break is in this range, the pressure sensitive adhesive foil can be applied with satisfaction on the surface of an underwater structure and give a good re-workability during the time of application. If the elongation at break is less than 15% of elongation, the working efficiency could be reduced because of the low elongation and breaking of the pressure sensitive adhesive foil.

The tensile strength at break of the pressure sensitive adhesive foil depends on the elongation of each of the layers (i)-(iv). Suitably, the tensile strength at break at 23 °C is at least 10 N/15 mm, more suitably, at least 20 N/15 mm. When the tensile strength at break is in this range, the pressure sensitive adhesive foil can be applied with satisfaction on the surfaces of an underwater structure and give a good re-workability during the time of application. If the tensile strength at break is less than 10 N/15 mm, the working efficiency could be reduced because of the fast breaking of the pressure sensitive adhesive foil, and is therefore undesired.

Suitably, the 180° peeling strength of adhesion of the pressure sensitive adhesive foil at a speed of 300 mm/min between the adhesive layer (ii) and the underwater structure, as measured according to the Finat test method FRM 1 at 23 C, is at least 10 N/25 mm, suitably 25N/25 mm, such as at least 40 N/25 mm. The higher the peeling strength is, the lower the risk to have self-lifting of the pressure sensitive adhesive foil from the underwater surface.

The pressure sensitive adhesive foil may be applied to any suitable structure. Generally, such structures may be formed from many different materials, for example, metals such as steel, aluminium and iron. In addition, suitable structures may be concrete structures. Suitable structures will be well known to a person skilled in the art, Examples of suitable structures include but are not limited to: marine vessels such as commercial vessels or yachts and the hulls' thereof, onshore structures such as pipelines for power stations and structures used in fish farming and offshore structures. Suitable structures also include both static underwater structures and dynamic underwater structures such as underwater equipment, in addition to transportable underwater structures such as oil rig platforms.

The pressure sensitive adhesive foil according to the present invention may be applied to the structure by any suitable method. Suitable application methods include direct application to the structure by manual or automated means. Suitably, all or part of the surface of the structure may be covered.

The pressure sensitive adhesive foil according to the present invention may be applied at ambient temperature. The pressure sensitive adhesive foil may be applied at any suitable temperature. Suitably, the pressure sensitive adhesive foil is applied at a temperature from - 10 °C to 60 °C, such as from 3 °C to 30 °C.

The structure to be coated may be pre-coated with suitable coating layers, including multiple suitable coating layers, before applying the pressure sensitive adhesive foil to the surface of the structure to be coated. Suitable coating layers will be well known to a person skilled in the art and may include coating layers such as an antifouling coating layer or an anti-corrosive layer.

The pressure sensitive adhesive foil according to the present invention may be applied directly to the structure to be coated (without further preparation of the surface to be coated) or the surface of the structure may require further preparation before application of the pressure sensitive adhesive foil. Prior to application of the pressure sensitive adhesive foil, the structure to be coated may be cleaned, such as by rinsing, with a suitable detergent or solvent. The nature of the detergent or the solvent will be dependent on factors such as the nature of the structure to be coated and the type of contaminant on the surface of the structure to be coated. Suitable examples of detergent or solvent will be well known to a person skilled in the art. Suitably, the structure to be coated is rinsed with xylene prior to application of the pressure sensitive adhesive foil.

### Edge Sealant Fouling Release Coating Composition (b)

The edge sealant fouling release coating composition according to the present invention may comprise:
a reactive silicone polymer;
a non-reactive silicone polymer; and
a crosslinker.

The reactive silicone polymer may comprise one or more polysiloxanes. Such polysiloxanes may include polysiloxanes derived from the condensation polymerisation of silicon compounds having chain terminating units including a silicon-bonded hydroxyl group in the presence of an appropriate acidic condensation catalyst. Suitably, the silicon compound comprises a hydroxyl end-blocked polydimethylsiloxane which is polymerised to produce a dihydroxyl polydimethylsiloxane. This reaction may be catalysed by, for example, a basic material.

As used herein, the terms "hydroxy" and "hydroxyl" are used interchangeably.

The reactive silicone polymer may comprise a polysiloxane having a structure defined by diorganosiloxane residues and terminal organosiloxane residues, and, optionally, branch organosiloxane residues. Such polysiloxanes include polysiloxanes derived from organo silicon compounds such as dimethyldichlorosilane and water and subsequent polymerisation. In addition, organo silicon compounds can be hydrolysed to form a polymer terminated with silanol groups. Such silane precurosrs with acid-forming groups can be used to introduce branching into the silicone polymer chain.

The reactive silicone polymer may comprise polyorganosiloxanes comprising predominantly dimethyl siloxane units especially those prepared by polymerization of a precursor siloxane comprising at least two siloxane units which have a silicon-bonded hydroxyl group in the presence of an acidic condensation catalyst.

The reactive silicone polymer may comprise one or more polysiloxanes, suitably one or more polyorganosiloxanes. Suitable examples of polyorganosiloxanes include alkyl and/or aryl substituted polyorganosiloxanes, such as polydimethylsiloxane, polydiethylsiloxane, polydimethylphenylsiloxane or combinations thereof. The polyorganosiloxanes may be linear or branched. The reactive silicone polymer may be a hydroxyl-functional silicone polymer. Suitably, the polyorganosiloxanes are hydroxyl-functional polyorganosiloxanes including hydroxyl-terminated polyorganosiloxanes, such as dihydroxyl polyorganosiloxanes including dihydroxyl polydimethylsiloxane, dihydroxyl polydiethylsiloxane and dihydroxyl polymethylphenylsiloxane. Suitably, the reactive silicone polymer is a dihydroxyl polydimethylsiloxane, most suitably a linear dihydroxyl polydimethylsiloxane.

The reactive silicone polymer may comprise commercially available polysiloxane materials. Examples of suitable polysiloxane materials include but are not limited to one or more of the following: SF2001E series, such as SF2001EDK005 and SF2001EDK020, commercially available from KCC Silicone; DMS-S series such as DMS-S27 and DMS-S42, commercially available from Gelest; Bluesil FLD series such as Bluesil FLD 48V750, Bluesil 48V3500 and Bluesil 48V10000, commercially available from BlueStar Silicones, OHX Polymer Series such as ONX-0750 polymer 750 cS, OHX-4010 polymer 4000 cS, OHC-0135 polymer 12500 cS, commercially available from Xiameter Silicones, or combinations thereof

Suitably, the reactive silicone polymer is a linear dihydroxl polydimethylsiloxane.

By the term "reactive silicone polymer" as used herein, is meant a silicone polymer operable to react with a crosslinker present in the edge sealant fouling release coating composition according to the present invention, for example, the reactive silicone polymer may comprise reactive functional groups such as hydroxyl (OH) groups, thus providing a hydroxyl-functional silicone polymer.

The reactive silicone polymer may have any suitable weight-average molecular weight (Mw). Suitably, the reactive silicone polymer has an Mw from 15,000 to 80,000 Daltons (Da = g/mole), suitably from 15,000 to 60,000 Da, or even from 15,000 to 45,000 Da.

The weight-average molecular weight (Mw) may be measured by any suitable method. Techniques to measure the weight-average molecular weight will be well known to those skilled in the art. The Mw values and ranges given herein are as determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector: 254 nm, solvent: unstabilised THF, retention time marker: toluene, sample concentration: 2 mg/ml).

The reactive silicone polymer may have any suitable hydroxyl (OH) content. Suitably, the reactive silicone polymer has a hydroxyl content from 0.01 to 0.4%, such as from between 0.1 to 0.2 % of the reactive silicone polymer. Methods to measure hydroxyl (OH) content will be well known to a person skilled in the art, such as described in Characterisation of silicone prepolymers and disparity in results; G.B.Shah; eXPRESS Polymer Letters Vol. 2, No.11 (2008) 829-834'.

The reactive silicone polymer may have any suitable viscosity. The reactive silicone polymer may have a viscosity from 700 to 20,000 mPa.s at 20 °C and shear rate 1.5 s⁻¹, suitably measured according to ASTM D2196-10. Suitably, the reactive silicone polymer has a viscosity from 5000 to 20,000 mPa.s at 20 °C and shear rate 1.5 s⁻¹, suitably from 5000 to 18,000 mPa.s at 20 °C and shear rate 1.5 s⁻¹.

Methods to measure viscosity will be well known to a person skilled in the art. Suitably, the viscosity is measured using a Brookfield RV spindle s7 at 6rpm and shear rate 1.5 s⁻¹ according to ASTM D2196-10 ("Standard Test Methods for Rheological Properties of Non-Newtonian Materials by Rotational (Brookfield type) Viscometer").

The reactive silicone polymer may have any suitable specific gravity measurement. Suitably, the reactive silicone polymer has a specific gravity measurement at 25 °C of between 0.9 to 1.0 g/cm³, such as between 0.97 to 0.98 g/cm³.

The reactive silicone polymer may have any suitable refractive index. Suitably, the reactive silicone polymer may have a refractive index of between 1350 and 1500, suitably 1350 and 1450, such as 1375 and 1425.

The reactive silicone polymer may be present in the edge sealant fouling release coating composition in any suitable amount. Suitably, the edge sealant fouling release coating composition comprises from 50 to 95 wt%, such as from 60 to 85 wt% of the reactive silicone polymer based on the total solid weight of the edge sealant fouling release coating composition.

The edge sealant fouling release coating composition of the present invention may comprise a non-reactive silicone polymer. The non-reactive silicone polymer may be produced by any suitable method. The non-reactive silicone polymer may comprise (homo)polymers and/or copolymers derived from combinations of polysiloxanes. Examples of suitable polysiloxanes include polyorganosiloxanes such as polydimethylsiloxane, polydiethylsiloxane, polymethylphenylsiloxane or combinations thereof. Suitably, the non-reactive polymer is a copolymer of polyorganosiloxanes, such as poly(dimethylsiloxane-co-methylphenylsiloxane).

The non-reactive silicone polymer may comprise commercially available polysiloxane materials. Examples of suitable polysiloxane materials include but are not limited to one or more of the following: DMS T series (polydimethylsiloxane) such as DMS T21 , DMS T22, DMS T23, DMS T25 and DMS T31, commercially available from Gelest; PMM series (poly(dimethylsiloxane-co-methylphenylsiloxane)) such as PMM1025 and PMM5021, commercially available from Gelest; SF series (polydimethylsiloxane) such as SF1000N, commercially available from KCC Silicone; SF series (poly(dimethylsiloxane-co-methylphenylsiloxane)) such as SF5000P and SF5400P, commercially available from KCC Silicone; AK series (polydimethylsiloxane) such as AK-100, AK-200, AK-350 and AK-500, commercially available from Wacker Silicones; Belsil DM1000 (polydimethylsiloxane) commercially available from Wacker Silicones; AP series (poly(dimethylsilioxane-co-methylphenylsiloxane)) such as AP-100, AP-200, AP-500 and AP-1000, commercially available from Wacker Silicones; Silopren W series (polydimethylsiloxane) such as Silopren W1000, commercially available from Momentive Performance Chemicals; Element 14 series (polydimethylsiloxane) such as 14 PDMS-E 500 and 14 PDMS-E 1000, commercially available from Momentive Performance Chemicals; Dow Corning 200 fluid (polydimethylsiloxane), commercially available from Dow Corning; Xiameter PMX-200 silicone fluid (polydimethylsiloxane) commercially available from Dow Corning; Silicon fluid series (poly(dimethylsiloxane-c-methylphenylsiloxane)) such as Silicon 510 Fluid and Silicon 550 Fluid, commercially available from Dow Corning; Bluesil Fluid FLD 47V1000 (polydimethylsiloxane) commercially available from Bluestar Silicones; Mirasil DM1000 (polydimethylsiloxane) commercially available from Bluestar Silicones; Rhodorsil series (poly(dimethylsiloxane-co-methylphenylsiloxane)) such as Rhodorsil oil 510 and Rhodorsil oil 550, commercially available from Bluestar Silicones; PSF series (polydimethylsiloxane) such as PSF 100, PSF 200, PSF 350 and PSF 500, commercially available from Clearco Silicone Fluids and PhenylMethyl Silicone Fluids (poly(dimethylsiloxane-co-methylphenylsiloxane)), such as PM-125, commercially available from Clearco Silicone Fluids, or combinations thereof.

Suitably, the non-reactive silicone polymer is poly(dimethylsiloxane-co-polymethylphenylsiloxane).

By the term "non-reactive silicone polymer" as used herein is meant a silicone polymer that does not react with a crosslinker present in the edge sealant fouling release coating composition according to the present invention. The non-reactive silicone polymer is unreactive to the extent that it does not interfere in the reaction between the reactive silicone polymer and the crosslinker.

The non-reactive silicone polymer may have any suitable weight-average molecular weight (Mw).Suitably, the non-reactive silicone polymer has an Mw from 6000 to 28,0000 Daltons (Da = g/mole), suitably from 10,000 to 28,000 Da, or even from 15,000 to 25,000 Da.

The weight-average molecular weight (Mw) may be measured by any suitable method. Techniques to measure the weight-average molecular weight will be well known to those skilled in the art. The Mw values and ranges given herein are as determined by gel permeation chromatography using a polystyrene standard according to ASTM D6579-11 ("Standard Practice for Molecular Weight Averages and Molecular Weight Distribution of Hydrocarbon, Rosin and Terpene Resins by Size Exclusion Chromatography". UV detector: 254 nm, solvent: unstabilised THF, retention time marker: toluene, sample concentration: 2 mg/ml).

The non-reactive silicone polymer may have any suitable viscosity. The non-reactive silicone polymer may have a viscosity from 100 to 1000 mPa.s at 20 °C and shear rate 1.5 s⁻¹, suitably measured according to ASTM D2196-10. Suitably, the non-reactive silicone polymer has a viscosity from 300 to 1000 mPa.s at 20 °C and shear rate 1.5 s⁻¹, suitably from 500 to 1000 mPa.s.

Methods to measure viscosity will be well known to a person skilled in the art. Suitably, the viscosity is measured using a Brookfield RV spindle s7 at 6rpm and shear rate 1.5 s⁻¹ according to ASTM D2196-10 ("Standard Test Methods for Rheological Properties of Non-Newtonian Materials by Rotational (Brookfield type) Viscometer").

The non-reactive silicone polymer may have any suitable specific gravity measurement. Suitably, the non-reactive silicone polymer may have a specific gravity measurement at 25 °C of between 0.95-1.0 g/cm³, such as between 0.96-0.98 g/cm³.

The non-reactive silicone polymer may have any suitable refractive index. Suitably, the non-reactive silicone polymer may have a refractive index of between 1400 and 1600, suitably 1400 to 1500.

The non-reactive silicone polymer may be present in the edge sealant fouling release coating composition in any suitable amount. Suitably, the coating composition comprises from 4 to 25 wt%, such as from 4 to 15 wt% or even from 5 to 10 wt% of the non-reactive silicone polymer based on the total solid weight of the edge sealant fouling release coating composition.

The edge sealant fouling release coating composition of the present invention may further comprise an additional non-reactive material. Examples of suitable non-reactive materials include paraffins such as fluid paraffin and/or wax paraffins and hydrotreated heavy naptha (petroleum).

The additional non-reactive material may comprise commercially available non-reactive materials. Examples of suitable non-reactive materials include but are not limited to one or more of the following: Isopar Fluids, such as Isopar H, Isopar K, Isopar L and Isopar M, commercially available from Exxon Mobile and Petroleum wax or petroleum jelly, commercially available from Global Comodity USA.

The edge sealant fouling release coating composition according to the present invention may comprise a crosslinker. The edge sealant fouling release coating composition may comprise one or more crosslinker. Suitable crosslinkers will be well known to a person skilled in the art. Non-limiting examples of suitable crosslinkers include silane-based compounds including acetoxysilanes such as methyltriacetoxy silane and oximinosilanes such as methylethylketoxime silanes and methylisobutylketoxime silane. Tri-functional silane-based compounds are particularly suitable. The term "functional" as used in this context is meant the presence of a silicone-oxygen bond. Suitable oximinosilanes may comprise either methylethylketoxime or methylisobutylketoxime (but not both) and either a methyl, vinyl, or phenyl group (trifunctional oxime silane), two methyl groups or a methyl and vinyl group (difunctional oxime silane), or no nonoxime group (tetrafunctional oxime silane) attached to the central silicon atom. Additional tri-functional silanes suitable as crosslinkers include vinyltrimethoxysilane, methyl-trimethyoxysilane or combinations thereof.

Suitable examples of commercially available crosslinkers include but are not limited to one or more of the following: SIV9209.0 (vinyltriisopropeneoxysilane), SIV9220.0 (vinyltrimethoxysilane) and SIV9280.0 (vinyltris(methylethylketoximino(silane)), commercially available from Gelest; Dynasylan MTMS (methyltrimethoxysilane), Dynasylan VTMO (vinyltrimethoxysilane) commercially available from Evonik; Z-6300 Silane (vinyltrumethoxysilane) commercially available from Dow Corning; OS-1000 (methytris(methylethylketoximino)-silane), OS-2000 (vinyltris(methylethylketoximino)-silane), commercially available from Honeywell; KBM-1003 (vinyltrimethoxysilane) commercially available form Shinetsu; Silquest A-171 (vinyltrimethoxysilane), crosslinker 3034 (ethyltriacetoxysilane), Silquest B-3448 (vinyltris(methylethylketoximino)-silane), and Silquest B-3449 (methyltris(methylethylketoximino)-silane), commercially available from Momentive; Vinox/VAS (vinyltris(methylethylketoximino)-silane), Wasox/MOS (methyltris(methylethylketoximino)-silane), LM-100 (diacetoneoximomethoxyvinylsilane), LM-400 (triacetoneoximoethylsilane), ETA (ethyltriacetoxysilane), MTA (methyltriacetoxysilane), PTA (propyltriacetoxysilane) and VTA (vinyltriacetoxysilane) commercially available from Rheinmetal/Nitrochemie; Geniosil XL 10 (vinyltrimethyoxysilane), Silane M1-trimethoxy (methyltrimethoxysilane), Geniosil GF 62 (vinyltriacetoxysilane) and Crosslinker ES-23 (ethyltriacetoxysilane), commercially available from Wacker Chemie, or combinations thereof.

Suitably, the crosslinker comprises is ethyl tri-acetoxysilane or vinyl ketoxime silane.

The crosslinker may be present in the edge sealant fouling release coating composition in any suitable amount.Suitably, the coating composition comprises from 2 to 15 wt%, such as from 3 to 13 wt% or even from 4 to 12 wt% of the crosslinker based on the total solid weight of the edge sealant fouling release coating composition.

The edge sealant fouling release coating composition may further comprise a catalyst. Suitable catalysts will be well known to those skilled in the art, such as catalysts suitable for use in room temperature hydrolysis or condensation reactions Suitable examples of catalysts include organic metal compounds and metal salts. Suitable examples of metal salts include metal carboxylates such as bismuth carboxylates (bismuth salts of fatty acids), zinc carboxylates, strontium carboxylates and metal titanates such as bismuth titanate or combinations thereof. Bismuth carboxylates such as bismuth tris(neodecanoate) and bismuth tris(2-ethylhexanoate) may be particular suitable. Examples of suitable organic metal compounds include organo tin compounds, including di-organo tin compounds such as di-alkyl-tin-di-carboxylate or di-alkyl-tin-di-ketonate. Suitably, the catalyst is a di-organo tin catalyst, most suitably a dibutyl-tin-dilaurate.

Suitable examples of commercially available catalysts include but are not limited to one or more of the following: Metatin Series such as Metatin Catalyst 712 ES (di-n-butyltin-dulaurate), Metatin Catalyst 812 ES (di-n-octyltin-di-laurate), Metatin 702 (di-n-butyltin-diacetate), Metatin Catalyst 725 (di-n-butyltin-isodecanoate) and Metatin Catalyst 740 (di-n-butyltin-di-ketonate), commercially available from Acima; Tegostab BL 277 (dibutyl-tin-dilaurate) commercially available from TibChemicals/Evonik; TibKat series such as TibKat 226 (di-n-butyltin-di-ketonate), TibKat 223 (di-n-butyltin-di-ketonate), TibKat 318 (di-n-octyltin-di-neodecanoate), TibKat 716 (bismuth tris(neodecanoate)) and TibKat 720 (Bismuth tris(2-ethylhexanoate)), commercially available from TibChemicals/Evonik; Borchikat series such as Borchikat 24 (bismuth tris(2-ethylhexanoate) and Borchikat 0244 (bismuth tris(2-ethylhexanoate(and zinc bis(2-ethylhexanoate)), commercially available from OMG Borchers; Octasoligen Sr10 (strontium bis(2-ethylhexanoate)), commercially available from OMG Borchers; K-Kat Series such as K-Kat 348 (bismuth tris(2-ethylhexanoate)), K-Kat XC-B221 (bismuth carboxylate); K-Kat XK-651 (bismuth carboxylate), K-Kat 670 (zinc compound and active organic material) and K-Kat XK-648 (amine salt/zinc complex), commercially available from King Industries and Tyzor Series, such as Tyzor Pita and Tyzor Pita SM, commercially available from Kenrich Petrochemicals or combinations thereof.

The catalyst may be present in the edge sealant fouling release coating composition in any suitable amount. Suitably, the edge sealant fouling release coating composition comprises up to 1 wt%, suitably up to 0.5 wt% of the catalyst based on the total solid weight of the edge sealant fouling release coating composition.

The edge sealant fouling release coating composition according to the present invention may further comprise an additive or combination of additives. Suitable additives will be well known to those skilled in the art. Examples of suitable additives include, but are not limited to the following: deformers; pigments; thixotropic agents; biocides; fragrances; fillers such as hydrophobic silica; adhesion agents; buffers; dispersing agents; surfactants; deaerators; surface control additives; surface active components such as pine oil; hydrophobing agents; wetting additives; rheological agents; anti-cratering additives; radiation curing additives; anticorrosion additives; pH regulators; anti-graffiti additives or combinations thereof.

Suitably rheology modifiers (rheological agents) will be well known to those skilled in the art. Suitable examples of rheology modifiers include, but are not limited to the following: fumed silica; precipitated silica; bentonite clay; clay; nano-clay; castor oils and derivatives thereof; polyamide wax; micronized amide wax or combinations thereof. The rheology modifier may be used in the edge sealant fouling release coating composition in amount of up to 2 wt% based on the total solid weight of the edge sealant fouling release coating composition.

Suitable pigments will be well known to those in the art. Suitable pigments may be, for example, silicone colour pastes. The pigment may be used in the edge sealant fouling release coating composition in any suitable amount. The pigment may be used in the edge sealant fouling release coating composition in an amount of between 3 to 7 wt% based on the total solid weight of the edge sealant fouling release coating composition.

Suitably, the edge sealant fouling release coating composition may comprise a pigment volume concentration (PVC) of up to 10 vol%, such as between 0.8 to 4 vol%, for example between 0.9 to 2 vol% of the total volume of the edge sealant fouling release coating composition. Methods of measurement of pigment volume concentration will be well known to a person skilled in the art. The pigment volume concentration refers to the volume of pigment and filler dived by the total volume of solids of the edge sealant fouling release coating composition, the total volume of solids being the volume of pigment and filler plus the volume of the non-volatile solid binder.

The edge sealant fouling release coating composition of the present invention may contain no additional solvent. Suitably, the solid content of the coating composition is at least 80 wt%, such as up to 90 wt% or even up to 100 wt% based on the total weight of the edge sealant fouling release coating composition.

The edge sealant fouling release coating composition of the present invention may further comprise one or more solvents. The solvent suitably comprises one or more organic solvent. Suitable organic solvents include, but are not limited to one or more of the following: aromatic hydrocarbons such as benzene; toluene; xylene; solvent naphtha 100, 150, 200; those available from Exxon-Mobil Chemical Company under the SOLVESSO trade name; ketones such as methyl isobutyl or combinations thereof. Suitably, the solvent is xylene. The solvent, when present, may suitably be used in the coating composition in an amount from 0 to 20 wt%, such as from 0 to 10 wt% based on the total solid weight of the coating composition.

The edge sealant fouling release coating composition according to the present invention may have any suitable viscosity. The viscosity of the edge sealant fouling release coating composition will be dependent on factors such as the end use of the edge sealant fouling release coating composition and the fouling release coating system according to the present invention. The edge sealant fouling release coating composition according to the present invention may have any suitable viscosity. The edge sealant fouling release coating composition may have a viscosity of between 1500 to 10000 mPa.s at 20 °C and shear rate 1.5 s⁻¹, suitably measured according to ASTM D2196-10. Suitably, the edge sealant fouling release coating composition has a viscosity of between 1500 to 5000 mPa.s at 20 °C and shear rate 1.5 s⁻¹, suitably from 1500-2500 mPa.s.

The viscosity may be measured within 10 minutes, such as within 5 minutes or even within 2 minutes of initial mixing of the first and second components (detailed below) of the edge sealant fouling release coating composition. The viscosity may be measured within 1 minute of the initial mixing of the first and second components of the edge sealant fouling release coating composition.

Methods to measure viscosity will be well known to those skilled in the art. Suitably, the viscosity is measured using Brookfield RV spindle s7 at 6rpm and shear rate 1.5 s⁻¹, according to ASTM D2196-10 ("Standard Test Methods for Rheological Properties of Non-Newtonian Materials by Rotational (Brookfield type)Viscometer").

The edge sealant fouling release coating composition may be applied to an edge of the pressure sensitive adhesive foil. The edge sealant fouling release coating composition may be applied to one or more edges of the pressure sensitive adhesive foil. Suitably, the edge sealant fouling release coating composition may be applied along the boundary between two or more pressures sensitive adhesive foils. Suitably, all or part of the edge of the pressure sensitive adhesive foil may be covered.

By "applied to the edge of the pressure sensitive adhesive foil" and like terms as used herein, is meant the edge sealant fouling release coating composition is applied to an edge region of the pressure sensitive adhesive foil, such that it extends over the boundary between an edge of the foil and the structure, such that the edge sealant fouling release coating composition may be also applied to the structure to be coated. This also extends to overlapping the gap between edges of adjacent foils.

The edge sealant fouling release coating composition according to the present invention may be applied to an edge of the pressure sensitive adhesive foil by any suitable method. Methods of applying said edge sealant fouling release coating composition will be known to a person skilled in the art. Suitable application methods include, but are not limited to the following: brush coating, spray coating, roll coating, dipping, casting, knifing and/or painting.

The edge sealant coating composition may be applied to the edge of the pressure sensitive adhesive foil after the pressure sensitive adhesive foil has been applied and adhered to the structure to be coated.

The edge sealant coating composition may be applied to the edge of the pressure sensitive adhesive foil in conjunction with the application of the pressure sensitive adhesive foil.

The edge sealant fouling release coating composition may be applied at ambient temperature.

The edge sealant fouling release coating composition may be applied to an edge of the pressure sensitive adhesive foil as a single layer or as part of a multi-layer system. The edge sealant fouling release coating composition may be applied on top of a primer or as the primer layer itself. The edge sealant fouling release coating composition may form a top coat layer. The edge sealant fouling release coating composition may be applied once or multiple times.

The edge sealant fouling release coating composition may be applied to an edge of the pressure sensitive adhesive foil to any suitable dry film thickness. The dry film thickness of the edge sealant fouling release coating composition will be dependent on factors such as the end-use of the edge sealant fouling release coating composition and fouling release coating system according to the present invention. The edge sealant fouling release coating composition may be applied to a dry film thickness of up to 2 mm. Suitably, the edge sealant fouling release coating composition is applied to a dry film thickness from 100 to 500 µm, such as from 100 to 300 µm, or even from 150 to 200 µm.

The edge sealant fouling release coating composition may be in the form of a two component (2K) composition having a first component composition and a second component composition. These first and second component compositions are suitably contacted together prior to application to the structure. The first component composition may comprise the reactive silicone polymer and the non-reactive silicone polymer and the second component may comprise the crosslinker. Both first and second components compositions comprise additional components, typically selected to minimise reactivity within each composition component.

The edge sealant fouling release coating compositions may be in the form of a single component (1K) composition.

The edge sealant fouling release coating composition may be stored as a single component (1K) or two component (2K) composition. When in the form of a single component (1K) composition, the edge sealant fouling release coating composition may be stored, prior to application, in an environment that does not contain moisture, at a temperature from between - 10 to 40 °C for at least 1 year after mixing of the two components.

The edge sealant fouling release coating composition may be cured at ambient temperature, for a period of time from 2 to 12 hours. The curing time will be dependent on a number of factors including the dry film thickness of the edge sealant fouling release coating composition and the humidity of the curing environment.

The edge sealant fouling release coating composition may be cured by a heat curing process. Suitably, the edge sealant fouling release coating composition may be cured at a temperature from between 60 to 130 °C, such as 90 to 120 °C. Suitably, the edge sealant fouling release coating composition is heat cured for a period of time from 5 to 15 minutes. Other methods of curing include using an IR (Infra-Red) application technique at a temperature of between 50 to 80 °C, such as between 55 to 65 °C.

The edge sealant fouling release coating composition according to the present invention may be applied directly to the edge of the pressure sensitive adhesive foil (without further preparation of the foil to be coated) or the pressure sensitive adhesive foil according to the present invention may require further preparation prior to application of the edge sealant fouling release coating composition. Prior to application of the edge sealant fouling release coating composition, the pressure sensitive adhesive foil may be cleaned, such as by rinsing, with a suitable detergent or solvent. The nature of the detergent or the solvent will be dependent on factors such as the type of contaminant on the surface of the foil to be coated. Suitable examples of detergents or solvent will be well known to a person skilled in the art. Suitably, the pressure sensitive adhesive foil to be coated is rinsed with xylene prior to application of the edge sealant fouling release coating composition.

Reference herein to an "outer surface" or like terms refers to an outermost surface, in use.

Suitably, one or more pressure sensitive adhesive foils are applied to a structure and the edge sealant fouling release coating composition applied between them, to the edges thereof.

According to a second aspect of the present invention, there is provided an underwater structure having a coating system on at least a portion thereof, the coating system comprising:
(a) a pressure sensitive adhesive foil adhered to the underwater structure, the pressure sensitive adhesive foil comprising an outer surface having a fouling release coating; and
(b) an edge sealant fouling release coating composition applied over an edge of the pressure sensitive adhesive foil and cured.

According to a third aspect of the present invention, there is provided a method of coating an underwater structure, the method comprising:
(a) adhering a pressure sensitive adhesive foil to the underwater structure, the pressure sensitive adhesive foil comprising an outer surface having a fouling release coating; and
(b) applying an edge sealant fouling release coating composition over an edge of the pressure sensitive adhesive foil and curing the same.

According to a fourth aspect of the present invention, there is provided a use of an edge sealant fouling release coating composition in a fouling release coating system, the coating system comprising a pressure sensitive adhesive foil comprising a fouling release coating, wherein the edge sealant fouling release coating composition is applied over an edge of the pressure sensitive adhesive foil and cured.

Suitably, the pressure sensitive adhesive foil is adhered to an underwater structure.

### Definitions

The term "alk" or "alkyl", as used herein unless otherwise defined, relates to saturated hydrocarbon radicals being straight, branched, cyclic or polycyclic moieties or combinations thereof and contain 1 to 20 carbon atoms, suitably 1 to 10 carbon atoms, more suitably 1 to 8 carbon atoms, still more suitably 1 to 6 carbon atoms, yet more suitably 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by one or more oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like.

The term "aryl", as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by one or more oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like.

Use of the term "aquatic" herein should be understood to relate to water, proximity to water or taking place in water, including both fresh water and salt water conditions. Similarly, the term "marine" as used herein, should be understood to relate to conditions relating to or found in seawater.

By the term "underwater structure" and like terms as used herein, includes articles which are wholly or partially submerged or temporarily or intermittently submerged in water (salt water or fresh water).

Reference herein to an "outer surface" or like terms refers to an outermost surface, in use.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein.

As used herein, the singular includes the plural and plural encompasses the singular, unless specifically stated otherwise. For example, the use of the singular, i.e. "a" or "an", includes "one or more". In addition, as used herein, the use of "or" means "and/or" unless specifically stated otherwise, even though "and/or" may be explicitly used in certain instances. As used herein, the term "polymer" refers to oligomers and both homopolymers and copolymers, and the prefix "poly" refers to two or more. Including, for example and like terms means including for example but not limited to.

For a better understanding of the invention and to show how the same may be carried into effect, reference will now be made, by way of example only, to the following experimental data.

### Examples

### Coating Compositions

Coating compositions 1 to 8 were prepared from two component compositions. Coating compositions 1 to 8 were prepared according to the formulations in Table 1. All amounts are given in percentage by weight (wt%).

### Coating Composition 1

The first component composition was prepared in a quantity of 20 kg with the aid of a high speed dissolver fitted with a dissolver disk with diameter 12.5 cm. 10 kg of linear di-hydroxyl polydimethylsiloxane was added to a 20L metal container and while mixing, 1.29 kg of silicone colour paste and 1.7 kg of the non-reactive poly(dimethylsiloxane-co-methylphenylsiloxane) were added and homogenised at medium speed of 1500 rpm. 0.2 kg of nano-clay was then added to the container, the container wall rinsed with xylene and the mixture was dispersed at high speed of 2000-2500 rpm. The dispersion process was completed when fineness of grind has reached ≤ 25 µm (as measured with a Hegman fineness gauge). The temperature after dispersion was 65 °C. The residual amount of 6,71 kg linear di OH functional PDMS polymer was the added to the container and homogenized at 1500 rpm. The end temperature was 45 °C.

The second component composition was prepared in a quantity of 4 kg. In a plastic container of 5 liter, 3,992 kg of ethyl-tri-acetoxysilane was weighed and to this, 0,008 kg of dibutyl-tin-dilaurate was added and the mixture homogenized.

The first and second component compositions were then mixed together in a quantity of 1 kg. 0,915 kg of the first component composition was combined with 0,085 kg of the second component composition and this mixture was homogenized with a high speed dissolver. With exclusion of moisture, this mixture can be stored as single component (1K) composition and is ready for use.

### Coating Composition 2

Coating composition 2 was prepared as per coating composition 1 in a quantity of 1 kg. However, the first and second component compositions were mixed such that the stoichiometry was half of that of coating composition 1.

### Coating Composition 3

Coating composition 3 was prepared as per coating composition 1 in a quantity of 1 kg. In the preparation of coating composition 3, after production of the first component composition, a 20 wt% solution of econea in methylisobutylketone was added to the first component composition. The solution was added at 20 wt% of the first component composition and homogenized at 1000 rpm.

### Coating Composition 4

Coating composition 4 was prepared as per coating composition 1 in a quantity of 1 kg. In the preparation of coating composition 4, 46.9 wt% of econea was added to the second component composition and homogenized by dispersing at 1000 rpm, resulting in a homogenous liquid.

### Coating Composition 5

Coating composition 5 was prepared as per coating composition 1 in a quantity of 1 kg. In the preparation of coating composition 5, 13.6 wt% of selektope was added to the second component composition and dissolved by dispersing at 1000 rpm, resulting in a clear solution.

### Coating Composition 6

Coating composition 6 was prepared as per coating composition 1 in a quantity of 1 kg.

### Coating Composition 7

Coating composition 7 was prepared as per coating composition 1 in a quantity of 1 kg.

### Coating Composition 8

Coating composition 8 was prepared as per coating composition 1 in a quantity of 1 kg. In the preparation of coating composition 8, after production of the first component composition, 3.75 wt% of pine oil was added to the first component composition and homogenized at 1000 rpm.

**Table 1 - Formulations of Coating Composition**

| | Coating Composition 1 | Coating Composition 2 | Coating Composition 3 | Coating Composition 4 | Coating Composition 5 | Coating Composition 6 | Coating Composition 7 | Coating Composition 8 | |
|---|---|---|---|---|---|---|---|---|---|
| FIRST COMPONENT COMPOSITION | | | | | | | | | |
| Linear dihydroxyl polydimethylsiloxane | 76.78 | 80.20 | 64.78 | 73.83 | 75.93 | 67.10 | 75.53 | 65.14 | Reactive silicone polymer |
| Poly(dimethylsiloxane-co-methylphenylsiloxane) | 7.83 | 8.18 | 6.59 | 7.52 | 7.74 | 6.84 | 7.69 | 6.64 | Non-reactive silicone polymer |
| Silicone colour paste | 5.93 | 6.19 | 5.07 | 5.71 | 5.87 | 5.18 | 5.83 | 5.03 | Pigment |
| Nano-clay | 0.92 | 0.97 | 0.77 | 0.88 | 0.91 | 0.80 | 0.90 | 0.78 | Rheology modifier |
| Methyl Isobutyl Ketone | - | - | 12.55 | - | - | - | - | - | Solvent |
| Econea | - | - | 3.11 | - | - | - | - | - | Biocide |
| Pine Oil | - | - | - | - | - | - | - | 2.92 | Surface active compound |

| SECOND COMPONENT COMPOSITION | | | | | | | | | |
|---|---|---|---|---|---|---|---|---|---|
| Ethyl tri-acetoxy silane | 8.52 | 4.45 | 7.11 | 8.19 | 8.38 | - | - | - | Crosslinker |
| Vinyl ketoxime silane | - | - | - | - | - | 11.36 | 5.69 | 11.02 | Crosslinker |
| Di-organo-tin catalyst | 0.02 | 0.01 | 0.02 | 0.02 | 0.02 | 0.02 | 0.01 | 0.02 | Catalyst |
| Econea | - | - | - | 3.85 | - | - | - | - | Biocide |
| Selektope | - | - | - | - | 1.15 | - | - | - | Biocide |
| Xylene | - | - | - | - | - | 8.70 | 4.35 | 8.45 | Solvent |

The properties of coating compositions 1 to 8 were tested via the following methods. Results are shown in Table 2.

### Test Methods

Preparation of test structures: Rectangular stainless steel panels (14 x 20 cm) were cleaned and degreased. The cleaned panels were coated with PPG's SigmaShield 610® to a dry film thickness of 150 µm. After curing for at least 1 day at ambient conditions, pressure sensitive adhesive foils were attached to the coated panels. A spacing of 2 cm was kept between the foils, creating artificial seams (gaps) between the foils. The coating compositions 1 to 8 were applied with a brush to the edges of the foils with small overlaps of 1 cm onto the fouling release coating on the outer surface of the foils.

Coating compositions 1 to 8 were tested for adhesion (dry and wet) and fouling release performance (soft fouling removal and hard fouling removal) according to the procedures below.

Adhesion (dry): Cross cut adhesion of the edge sealant fouling release coating composition was measured using a sharp knife to cut a cross-cut into the surface of the edge sealant fouling release coating composition on the test panels. The surface was aggravated with nail scratching and rubbing of a spatula over the surface and the extent of adhesion was evaluated. The adhesion (dry) was evaluated quantitatively using a rating of 0 (total delamination of the coating composition) to 5 (coating composition cannot be removed), with 5 being the best.

Adhesion (wet): The test panels were immersed for at least 1 day in tap water and then removed from the water and evaluated quantitatively for adhesion (wet) using the evaluation method as for adhesion (dry) and a rating of 0 (total delamination of the coating composition) to 5 (coating composition cannot be removed), with 5 being the best.

Fouling Release Performance (soft fouling removal): The test panels were submerged in seawater in Kats (The Netherlands) and placed on a static raft at depths of 20 cm (centimetres), 50 cm, 110 cm and 140 cm below the water line. Soft fouling includes the adhesion of fouling organisms such as slime and algae. After removal of the panels from the seawater, the fouled surfaces of the test panels were wiped with a soft wet brush and immediately inspected. The test panels were first evaluated after 4 months from initial submersion and then several times up to 12 months from the initial submersion. The fouling release performance (soft fouling removal) was evaluated at each inspection to obtain an average value for the panels at each depth and these values were averaged to obtain the overall fouling release performance (soft fouling removal). The overall fouling release performance (soft fouling removal) was evaluated using a rating of 0 to 4, with 0 being the best as detailed below.
0: no soft fouling organisms remain on the surface of the test panel.
1: less than 10% of the surface of the test panel has soft fouling organisms attached thereto.
2: between 10 to 20% of the surface of the test panel has soft fouling organisms attached thereto.
3: between 20 to 50% of the surface of the test panel has soft fouling organisms attached thereto.
4: greater than 50% of the surface of the test panel has soft fouling organisms attached thereto.

Fouling Release Performance (hard fouling removal): The test panels were submerged in seawater in Kats (The Netherlands) and placed on a static raft at depths of 20cm, 50cm, 110cm and 140 cm below the water line. Hard fouling includes the adhesion of fouling organisms such as barnacles, tubeworms and mussels. After removal of the panels from the seawater, the fouled surfaces of the test panels were wiped with a soft wet brush and immediately inspected. The test panels were evaluated several times during a 4 to 10 month period and the fouling release performance (hard fouling removal) was evaluated at each inspection to obtain an average value for the panels at each depth and these values were averaged to obtain the overall fouling release performance (hard fouling removal). The overall fouling release performance (hard fouling removal) was evaluated using a rating of 0 to 4, with 0 being the best.
0: no hard fouling organisms remain on the surface of the test panel.
1: less than 3% of the surface of the test panel has hard fouling organisms attached thereto.
2: between 3 to 10% of the surface of the test panel has hard fouling organisms attached thereto.
3: between 10 to 20% of the surface of the test panel has hard fouling organisms attached thereto.
4: greater than 20% of the surface of the test panel has hard fouling organisms attached thereto.

The results are shown in Table 2, below.

**Table 2 - Test Results**

| | Coating Composition 1 | Coating Composition 2 | Coating Composition 3 | Coating Composition 4 | Coating Composition 5 | Coating Composition 6 | Coating Composition 7 | Coating Composition 8 |
|---|---|---|---|---|---|---|---|---|
| Adhesion (dry) | 5 | 5 | 5 | 5 | 5 | 5 | 5 | 5 |
| Adhesion (wet) | 5 | 4 | 5 | 5 | 5 | 3 | 3 | 3 |
| Fouling release performance (soft fouling removal) | 0.5 | 0.25 | 2 | 2.25 | 2 | 0 | 0.25 | 0 |
| Fouling release performance (hard fouling removal) | 1 | 1.5 | 0 | 0 | 1.5 | 0.75 | 0.5 | 0.75 |

## Claims

1. A fouling release coating system comprising:
(a) a pressure sensitive adhesive foil comprising a fouling release coating; and
(b) an edge sealant fouling release coating composition operable to be applied to an edge of the pressure sensitive adhesive foil.

2. A fouling release coating system according to claim 1, wherein the pressure sensitive adhesive foil comprises:
(i) an adhesive layer;
(ii) a structural layer applied over and to the adhesive layer (i);
(iii) optionally, an intermediate silicone tie coat applied over and to the structural layer (ii); and
(iv) a silicone fouling release top coat applied over and to the structural layer (ii) or, when present, over and to the intermediate silicone tie coat (iii).

3. A fouling release coating system according to claim 2, wherein the structural layer (ii) comprises either a synthetic material layer (iia) or a thermoplastic layer (iib).

4. A fouling release coating system according to any preceding claim, wherein the edge sealant fouling release coating composition comprises a reactive silicone polymer, a non-reactive silicone polymer and a crosslinker.

5. A fouling release coating system according to claim 4, wherein the reactive silicone polymer comprises a hydroxyl-functional polyorganosiloxane.

6. An underwater structure having a fouling release coating system on at least a portion thereof, the fouling release coating system comprising:
(a) a pressure sensitive adhesive foil adhered to the underwater structure, the pressure sensitive adhesive foil comprising an outer surface having a fouling release coating; and
(b) an edge sealant fouling release coating composition applied over an edge of the pressure sensitive adhesive foil and cured.

7. An underwater structure according to claim 6, wherein the pressure sensitive adhesive foil comprises:
(i) an adhesive layer;
(ii) a structural layer applied over and to the adhesive layer (i);
(iii) optionally, an intermediate silicone tie coat applied over and to the structural layer (ii); and
(iv) a silicone fouling release top coat applied over and to the structural layer (ii) or, when present, over and to the intermediate silicone tie coat (iii).

8. An underwater structure according to claim 7, wherein the structural layer (ii) comprises either a synthetic material layer (iia) or a thermoplastic layer (iib).

9. An underwater structure according to any one of claims 6 to 8, wherein the edge sealant fouling release coating composition comprises a reactive silicone polymer, a non-reactive silicone polymer and a crosslinker, preferably wherein the reactive silicone polymer comprises a hydroxyl-functional polyorganosiloxane.

10. A method of coating an underwater structure, the method comprising:
(a) adhering a pressure sensitive adhesive foil to the underwater structure, the pressure sensitive adhesive foil comprising an outer surface having a fouling release coating; and
(b) applying an edge sealant fouling release coating composition over an edge of the pressure sensitive adhesive foil and curing the same.

11. A method according to claim 10, wherein the pressure sensitive adhesive foil comprises:
(i) an adhesive layer;
(ii) a structural layer applied over and to the adhesive layer (i);
(iii) optionally, an intermediate silicone tie coat applied over and to the structural layer (ii); and
(iv) a silicone fouling release top coat applied over and to the structural layer (ii) or, when present, over and to the intermediate silicone tie coat (iii).

12. A method according to claim 11, wherein the structural layer (ii) comprises either a synthetic material layer (iia) or a thermoplastic layer (iib).

13. A method according to any one of claims 10 to 12, wherein the edge sealant fouling release coating composition comprises a reactive silicone polymer, a non-reactive silicone polymer and a crosslinker, preferably wherein the reactive silicone polymer comprises a hydroxyl-functional polyorganosiloxane.

14. Use of an edge sealant fouling release coating composition in a fouling release coating system, the coating system comprising a pressure sensitive adhesive foil comprising a fouling release coating, wherein the edge sealant fouling release coating composition is applied over an edge of the pressure sensitive adhesive foil and cured.

15. Use of an edge sealant fouling release coating composition according to claim 14, wherein the pressure sensitive adhesive foil is adhered to an underwater structure.

## Patentansprüche

1. Fouling-Release-Beschichtungssystem, umfassend:
(a) eine Haftklebefolie, die eine Fouling-Release-Beschichtung umfasst; und
(b) eine Randversiegelungs-Fouling-Release-Beschichtungszusammensetzung, die funktionsfähig ist, auf einen Rand der Haftklebefolie aufgebracht zu werden.

2. Fouling-Release-Beschichtungssystem gemäß Anspruch 1, wobei die Haftklebefolie umfasst:
(i) eine Klebstoffschicht;
(ii) eine Strukturschicht, die über und an der Klebstoffschicht (i) angebracht ist;
(iii) gegebenenfalls eine zwischenliegende Silicon-Bindeschicht, die über und an der Strukturschicht (ii) angebracht ist; und
(iv) eine Silicon-Fouling-Release-Deckschicht, die über und an der Strukturschicht (ii) oder, falls vorhanden, über und an der zwischenliegenden Silicon-Bindeschicht (iii) angebracht ist.

3. Fouling-Release-Beschichtungssystem gemäß Anspruch 2, wobei die Strukturschicht (ii) entweder eine Schicht aus synthetischem Material (iia) oder eine thermoplastische Schicht (iib) umfasst.

4. Fouling-Release-Beschichtungssystem gemäß einem der vorstehenden Ansprüche, wobei die Randversiegelungs-Fouling-Release-Beschichtungszusammensetzung ein reaktives Siliconpolymer, ein nichtreaktives Siliconpolymer und einen Vernetzer umfasst.

5. Fouling-Release-Beschichtungssystem gemäß Anspruch 4, wobei das reaktive Siliconpolymer ein hydroxyfunktionelles Polyorganosiloxan umfasst.

6. Unterwasserstruktur mit einem Fouling-Release-Beschichtungssystem auf wenigstens einem Teil davon, wobei das Fouling-Release-Beschichtungssystem umfasst:
(a) eine an die Unterwasserstruktur gehaftete Haftklebefolie, wobei die Haftklebefolie eine Außenoberfläche mit einer Fouling-Release-Beschichtung umfasst; und
(b) eine Randversiegelungs-Fouling-Release-Beschichtungszusammensetzung, die über einem Rand der Haftklebefolie aufgebracht und gehärtet ist.

7. Unterwasserstruktur gemäß Anspruch 6, wobei die Haftklebefolie umfasst:
(i) eine Klebstoffschicht;
(ii) eine Strukturschicht, die über und an der Klebstoffschicht (i) angebracht ist;
(iii) gegebenenfalls eine zwischenliegende Silicon-Bindeschicht, die über und an der Strukturschicht (ii) angebracht ist; und
(iv) eine Silicon-Fouling-Release-Deckschicht, die über und an der Strukturschicht (ii) oder, falls vorhanden, über und an der zwischenliegenden Silicon-Bindeschicht (iii) angebracht ist.

8. Unterwasserstruktur gemäß Anspruch 7, wobei die Strukturschicht (ii) entweder eine Schicht aus synthetischem Material (iia) oder eine thermoplastische Schicht (iib) umfasst.

9. Unterwasserstruktur gemäß einem der Ansprüche 6 bis 8, wobei die Randversiegelungs-Fouling-Release-Beschichtungszusammensetzung ein reaktives Siliconpolymer, ein nichtreaktives Siliconpolymer und einen Vernetzer umfasst, wobei das reaktive Siliconpolymer vorzugsweise ein hydroxyfunktionelles Polyorganosiloxan umfasst.

10. Verfahren zum Beschichten einer Unterwasserstruktur, wobei das Verfahren umfasst:
(a) Anhaften einer Haftklebefolie an die Unterwasserstruktur, wobei die Haftklebefolie eine Außenoberfläche mit einer Fouling-Release-Beschichtung umfasst; und
(b) Aufbringen einer Randversiegelungs-Fouling-Release-Beschichtungszusammensetzung über einem Rand der Haftklebefolie und Härten davon.

11. Verfahren gemäß Anspruch 10, wobei die Haftklebefolie umfasst:
(i) eine Klebstoffschicht;
(ii) eine Strukturschicht, die über und an der Klebstoffschicht (i) angebracht ist;
(iii) gegebenenfalls eine zwischenliegende Silicon-Bindeschicht, die über und an der Strukturschicht (ii) angebracht ist; und
(iv) eine Silicon-Fouling-Release-Deckschicht, die über und an der Strukturschicht (ii) oder, falls vorhanden, über und an der zwischenliegenden Silicon-Bindeschicht (iii) angebracht ist.

12. Verfahren gemäß Anspruch 11, wobei die Strukturschicht (ii) entweder eine Schicht aus synthetischem Material (iia) oder eine thermoplastische Schicht (iib) umfasst.

13. Verfahren gemäß einem der Ansprüche 10 bis 12, wobei die Randversiegelungs-Fouling-Release-Beschichtungszusammensetzung ein reaktives Siliconpolymer, ein nichtreaktives Siliconpolymer und einen Vernetzer umfasst, wobei das reaktive Siliconpolymer vorzugsweise ein hydroxyfunktionelles Polyorganosiloxan umfasst.

14. Verwendung einer Randversiegelungs-Fouling-Release-Beschichtungszusammensetzung in einem Fouling-Release-Beschichtungssystem, wobei das Beschichtungssystem eine Haftklebefolie mit einer Fouling-Release-Beschichtung umfasst, wobei die Randversiegelungs-Fouling-Release-Beschichtungszusammensetzung über einem Rand der Haftklebefolie aufgebracht und gehärtet wird.

15. Verwendung einer Randversiegelungs-Fouling-Release-Beschichtungszusammensetzung gemäß Anspruch 14, wobei die Haftklebefolie an eine Unterwasserstruktur angehaftet wird.

## Revendications

1. Système de revêtement antisalissures comprenant :
(a) une feuille adhésive sensible à la pression comprenant un revêtement antisalissures ; et
(b) une composition de revêtement antisalissures d'agent d'étanchéité de bord utilisable pour être appliquée à un bord de la feuille adhésive sensible à la pression.

2. Système de revêtement antisalissures selon la revendication 1, la feuille adhésive sensible à la pression comprenant :
(i) une couche adhésive ;
(ii) une couche structurale appliquée sur et à la couche adhésive (i) ;
(iii) éventuellement, une couche de liaison de silicone intermédiaire appliquée sur et à la couche structurale (ii) ; et
(iv) une couche de finition antisalissures de silicone appliquée sur et à la couche structurale (ii) ou, lorsqu'elle est présente, sur et à la couche de liaison de silicone intermédiaire (iii).

3. Système de revêtement antisalissures selon la revendication 2, la couche structurale (ii) comprenant soit une couche de matériau synthétique (iia), soit une couche thermoplastique (iib).

4. Système de revêtement antisalissures selon une quelconque revendication précédente, la composition de revêtement antisalissures d'agent d'étanchéité de bord comprenant un polymère réactif de silicone, un polymère non réactif de silicone et un agent de réticulation.

5. Système de revêtement antisalissures selon la revendication 4, le polymère réactif de silicone comprenant un polyorganosiloxane fonctionnalisé par hydroxyle.

6. Structure sous-marine possédant un système de revêtement antisalissures sur au moins une partie de celle-ci, le système de revêtement antisalissures comprenant :
(a) une feuille adhésive sensible à la pression adhérée à la structure sous-marine, la feuille adhésive sensible à la pression comprenant une surface externe possédant un revêtement antisalissures ; et
(b) une composition de revêtement antisalissures d'agent d'étanchéité de bord appliquée sur un bord de la feuille adhésive sensible à la pression et durcie.

7. Structure sous-marine selon la revendication 6, la feuille adhésive sensible à la pression comprenant :
(i) une couche adhésive ;
(ii) une couche structurale appliquée sur et à la couche adhésive (i) ;
(iii) éventuellement, une couche de liaison de silicone intermédiaire appliquée sur et à la couche structurale (ii) ; et
(iv) une couche de finition antisalissures de silicone appliquée sur et à la couche structurale (ii) ou, lorsqu'elle est présente, sur et à la couche de liaison de silicone intermédiaire (iii).

8. Structure sous-marine selon la revendication 7, la couche structurale (ii) comprenant soit une couche de matériau synthétique (iia), soit une couche thermoplastique (iib).

9. Structure sous-marine selon l'une quelconque des revendications 6 à 8, la composition de revêtement antisalissures d'agent d'étanchéité de bord comprenant un polymère réactif de silicone, un polymère non réactif de silicone et un agent de réticulation, préférablement le polymère réactif de silicone comprenant un polyorganosiloxane fonctionnalisé par hydroxyle.

10. Procédé de revêtement d'une structure sous-marine, le procédé comprenant :
(a) l'adhérence d'une feuille adhésive sensible à la pression à la structure sous-marine, la feuille adhésive sensible à la pression comprenant une surface externe possédant un revêtement antisalissures ; et
(b) l'application d'une composition de revêtement antisalissures d'agent d'étanchéité de bord sur un bord de la feuille adhésive sensible à la pression et le durcissement de celle-ci.

11. Procédé selon la revendication 10, la feuille adhésive sensible à la pression comprenant :
(i) une couche adhésive ;
(ii) une couche structurale appliquée sur et à la couche adhésive (i) ;
(iii) éventuellement, une couche de liaison de silicone intermédiaire appliquée sur et à la couche structurale (ii) ; et
(iv) une couche de finition antisalissures de silicone appliquée sur et à la couche structurale (ii) ou, lorsqu'elle est présente, sur et à la couche de liaison de silicone intermédiaire (iii).

12. Procédé selon la revendication 11, la couche structurale (ii) comprenant soit une couche de matériau synthétique (iia), soit une couche thermoplastique (iib).

13. Procédé selon l'une quelconque des revendications 10 à 12, la composition de revêtement antisalissures d'agent d'étanchéité de bord comprenant un polymère réactif de silicone, un polymère non réactif de silicone et un agent de réticulation, préférablement le polymère réactif de silicone comprenant un polyorganosiloxane fonctionnalisé par hydroxyle.

14. Utilisation d'une composition de revêtement antisalissures d'agent d'étanchéité de bord dans un système de revêtement antisalissures, le système de revêtement comprenant une feuille adhésive sensible à la pression comprenant un revêtement antisalissures, la composition de revêtement antisalissures d'agent d'étanchéité de bord étant appliquée sur un bord de la feuille adhésive sensible à la pression et durcie.

15. Utilisation d'une composition de revêtement antisalissures d'agent d'étanchéité de bord selon la revendication 14, la feuille adhésive sensible à la pression étant adhérée à une structure sous-marine.
